# EUROPEAN PATENT APPLICATION

(11) **EP 3 761 134 A1**
(43) Date of publication of application: **06.01.2021**
(21) Application number: 20183577.4
(22) Date of filing: 02.07.2020
(51) Int. Cl.: G05B 23/02

(54) **METHOD AND ARRANGEMENT FOR PROCESSING DATA AT A TIMBER HANDLING LINE**

(30) Priority: 05.07.2019 FI 20195615
(71) Applicant: UPM-Kymmene Corporation, 00100 Helsinki (FI)
(72) Inventor: Surakka, Joni, 28360 Pori (FI)
(74) Representative: Papula Oy

(57) **Abstract**

At a timber handling line, data provided by devices of the handling line are automatically collected, the data indicating characteristics in the operation of the devices of the handling line, and the time which, on the basis of the collected data, is unavailable for normal operation of the handling line due to a fault is automatically measured. The causes which, on the basis of the collected data, led to one or more deviations from the normal operation of the handling line are indicated to a user. For each of the causes, the object of the fault at the handling line as well as the amount of the measured time that was unavailable for the normal operation of the handling line due to the cause are indicated.

## Description

### FIELD OF THE INVENTION

The invention generally relates to timber handling on an industrial scale. Specifically, the invention proposes how downtime caused by faults may be monitored and reduced at an industrial-scale timber handling line.

### BACKGROUND OF THE INVENTION

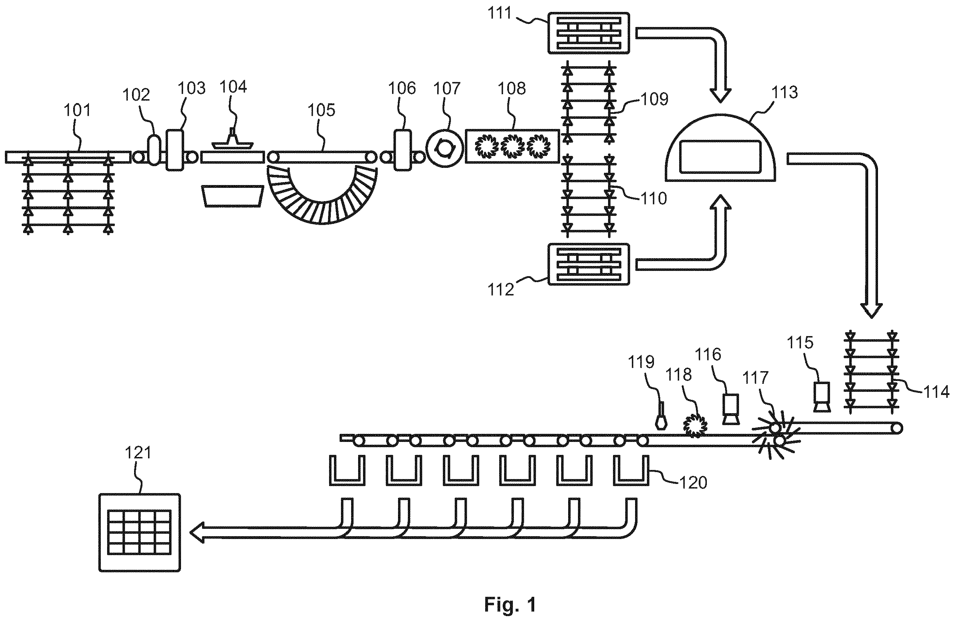

An industrial-scale timber handling line produces specified-quality timber which is sorted and packed in a desired manner. Fig. 1 schematically presents one exemplifying handling line. A log conveyor 101 carries logs, which have been unstacked from storage stacks, onto the line where they first travel through a metal detector 102 and a measuring device 103. The line may be provided with an exit 104 for removing poor-quality logs, and a turning ring 105 for turning the logs so that their base end points to a desired direction. After a measuring device 106 and a rotating device 107, the logs move to a saw 108 for sawing them into planks, which may then be initially sorted by conveyors 109 and 110. The sawn planks are bundled in bundling devices 111 and 112 with sticks placed between the planks for the circulation of drying air. The bundles are dried in a dryer 113, whereafter a dispersing conveyor 114 carries unbundled planks to sorting. The sorting may include various stages such as scanning 115 and 116, turning 117, sawing to length 118 and end trimming 119. The sorted planks are collected into pockets 120, from where they are carried to packing 121 in predetermined-sized bundles.

The handling line is its most efficient when each of the logs, planks and other objects being handled move at the line as intended. Faults at the line occur when, for example, a plank is not turned correctly, does not go into a correct space between flights, or lands diagonally. For the time of clearing up the fault, the line stands or runs empty, which reduces efficiency.

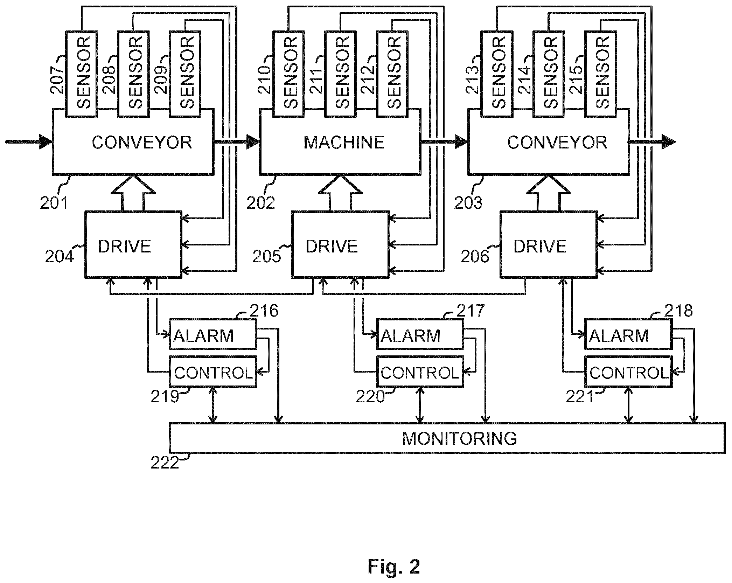

Fig. 2 schematically presents the provision of sensors at a handling line according to the prior art. The essential handling stages may be typically described as conveyors 201 and 202 and machines 203. Machines denote in this text all those stages which process timber, for example by sawing, labelling or in other ways. Conveyors denote herein all those stages which merely move the timber from one place to another. Each of them have their own drive 204, 205 or 206 which provides drive power to the stage in question, for example rotates electric motors of a particular conveyor or machine and/or moves hydraulic cylinders. In addition to stages that are clearly classifiable as conveyors or machines, the handling line may also comprise other elements, such as side product lines, lubricating systems, imaging and measuring stages, moisture generators, and so on.

Each of the stages or other elements of the handling line may be provided with sensors, of which in Fig. 2 sensors 207-215 are presented. The sensor may be for example a light cell or a camera that detects an incorrectly positioned plank. The sensor signals are conveyed to the drive of the stage in question, which drive is programmed to react to them in an appropriate manner, for example by stopping the movement of some element in order that a fault situation would not become worse. The drive of each stage may also transmit a signal to the previous stage's drive, which may react by ensuring that no more timber is force-fed to the fault point before the fault has been cleared up. An alarm 216, 217, or 218 may be given for the faults for example by turning on a warning light on an operating panel. Each of the stages may have a respective stage-specific control 219, 220, or 221. In addition, the operation of the whole line may be monitored from a monitoring station 222 that may obtain data on the alarms and from where the operation of the stages of the line may be controlled remotely.

### SUMMARY OF THE INVENTION

An object of the invention is to present a method and an arrangement by means of which it is possible to process data describing the operation of a timber handling line to help to improve the efficiency of the handling line. An object of the invention is that such method and arrangement will be flexibly adaptable to the structure and operation of different timber handling lines. In addition, an object of the invention is that by means of the invention, a decrease in efficiency of the handling line specifically due to short-term, i.e. minor faults would be brought under control.

The objects of the invention are achieved by automatically collecting data provided by devices of the handling line, the data indicating characteristics in the operation invoked by the devices of the handling line, and by indicating what these data disclose about the cause, object and duration of faults at the handling line.

A first aspect relates to a method for processing data at a timber handling line, the method comprising automatically collecting data provided by devices of the handling line, the data indicating characteristics in the operation of the devices of the handling line. In the method, the time which, on the basis of the collected data, is unavailable for normal operation of the handling line due to a fault is automatically measured, and the causes which, on the basis of the collected data, led to one or more deviations from the normal operation of the handling line are indicated to a user. For each of the causes, the object of the fault at the handling line as well as the amount of the measured time that was unavailable for the normal operation of the handling line due to the cause are indicated.

According to one embodiment, said collecting of data provided by devices of the handling line includes collecting of data from sensors that monitor the operation of stages of the handling line. This has the advantage that data on events previously considered to be merely stage-specific and directly affecting the operation of the handling line can be stored in such a way that, on their basis, conclusions and estimations may also afterwards be made regarding how much the operation of the handling line differed from normal.

According to one embodiment, said collecting of data provided by devices of the handling line includes collecting of data from drives that provide drive power to the stages of the handling line. This has the same advantage as above, i.e. data on events previously considered to be merely stage-specific and directly affecting the operation of the handling line can be stored in such a way that, on their basis, conclusions and estimations may also afterwards be made regarding how much the operation of the handling line differed from normal.

According to one embodiment, said indicating of the causes to a user includes making conclusions in a way that at least one cause indicated to a user is a conclusion made on the basis of two or more pieces of data collected from the devices of the handling line. This has the advantage that the user obtains refined data and is able to better understand what actually caused the handling line to not run for the whole time as efficiently as it should have.

According to one embodiment, said conclusions comprise at least one of the following: data derived from a load rate of one or more conveyors being lower than normally, indicating a fault before the one or more conveyors in question; data derived from conveyors running while the load rate is decreasing, indicating congestion at a particular stage of the handling line; data derived from breach of a safety area and from other data provided by devices of the handling line, indicating location of the fault. This has the advantage that especially in the cases disclosed herein, the user can better find out the real cause of the fault.

According to one embodiment, said data provided by devices of the handling line comprise at least one of the following: data on a conveyor running or not running; data on the load rate of a stage of the handling line; data on a diagonal or faulty feed detected by a sensor; surface level data indicating a surface level of some container; an image provided by an imaging system in connection with the handling line; data on a user operation performed to control the drive of a stage of the handling line. This has the advantage that especially in the cases disclosed herein, the user can better find out the real cause of the fault.

According to one embodiment, said indicating of the causes to a user is performed on the basis of data resulting in shorter-term deviations than a predetermined time limit from the normal operation of the handling line. This has the advantage that such data are obtained concerning operational efficiency of the handling line which, due to the generally applied reporting procedures, could otherwise remain unnoticed.

According to one embodiment, in the method those automatically collected data provided by devices of the handling line which indicate deviations from the normal operation of the handling line are indicated to a user in real time. This has the advantage that the user may, if desired, take action enhancing the operation of the handling line with the smallest possible delay.

A second aspect relates to an arrangement for processing data at a timber handling line, the arrangement comprising an automatic data collector arranged to automatically collect data provided by devices of the handling line, the data indicating characteristics in the operation of the devices of the handling line. The arrangement comprises a clock and a processing section connected to said data collector and clock and arranged to automatically measure the time which, on the basis of the collected data, was unavailable for normal operation of the handling line due to a fault. The processing section is arranged to indicate, to a user, the causes which, on the basis of the collected data, led to one or more deviations from the normal operation of the handling line and, for each of the causes, the object of the fault at the handling line as well as the amount of the measured time that was unavailable for the normal operation of the handling line due to the cause.

According to one embodiment, the arrangement comprises sensors that are arranged to monitor the operation of stages of the handling line and are connected to said automatic data collector for collecting the data provided by the sensors. This has the advantage that data on events previously considered to be merely stage-specific and directly affecting the operation of the handling line can be stored in such a way that, on their basis, conclusions and estimations may also afterwards be made regarding how much the operation of the handling line differed from normal.

According to one embodiment, the arrangement comprises one or more drives for providing drive power to the stages of the handling line, which drives are connected to said automatic data collector for collecting the data provided by the drives. This has the same advantage as above, i.e. data on events previously considered to be merely stage-specific and directly affecting the operation of the handling line can be stored in such a way that, on their basis, conclusions and estimations may also afterwards be made regarding how much the operation of the handling line differed from normal.

According to one embodiment, said processing section is arranged to make conclusions in a way that at least one cause indicated to a user is a conclusion made on the basis of two or more pieces of data collected from the devices of the handling line. This has the advantage that the user obtains refined data and is able to better understand what actually caused the handling line to not run for the whole time as efficiently as it should have.

According to one embodiment, the arrangement comprises a user interface for indicating, to a user, in real time those automatically collected data provided by devices of the handling line which indicate deviations from the normal operation of the handling line. This has the advantage that the user may, if desired, take action enhancing the operation of the handling line with the smallest possible delay.

### LIST OF FIGURES

**Fig. 1** presents one timber handling line,
**Fig. 2** presents an example of the provision of sensors at a timber handling line, and
**Fig. 3** presents a principle of automatic data collection.

### DETAILED DESCRIPTION OF THE INVENTION

The normal operation of a timber handling line denotes, in this text, a situation where the devices of the handling line are essentially running and timber is moved and handled at the line at a rate decided by users of the line. A fault denotes a situation that temporarily interrupts the normal operation of the handling line. Faults include for example slowing down or stopping of some device which is an essential part of the handling line, or jamming or incorrect positioning of a log, plank or bundle of planks moving on the line. The fault causes the timber handling line to be out of normal operation for the time spent in fixing the fault. The faults may be divided according to duration into long-term faults and short-term, i.e. minor faults. The duration of a minor fault may be for example 1 s - 5 min, or 10 s - 3 min, or 20 s - 2 min.

When inspecting the operational efficiency of a timber handling line, it has been noticed that there are differences in the handling of fault situations depending on how long the fault causes a significant deviation from the normal operation of the line. From a human point of view, it is understandable that workers responsible for the operation of the line pay most attention to long-term faults. It may be defined in the instructions and protocols applied to improve the efficiency that an entry or description must be recorded for all "significant" or "long-lasting" faults in a log by means of which the overall operation of the line is monitored. If entries for a specific type of fault in the log would seem to be frequently repeated, it stands to reason that the efficiency of the line would improve if such types of faults could be prevented.

However, it is somewhat subjective which faults are considered to be "significant" or "long-lasting", i.e. what will be finally recorded in the log. Further, also short-term faults may as a whole cause a significant decrease in efficiency, but this may remain unnoticed in the observations, because recording each of the short-term faults in the log would be found too laborious considering the benefit achieved by the recordings, and thus they will not necessarily be recorded at all. It may be customary, for example, that if the line is out of normal operation for less than two minutes due to a fault, there will typically be left no log entry or other stored data that would enable the corresponding fault events to be monitored over a longer period or serve as a sufficient basis for investigating and preventing the causes of the fault.

The present invention utilizes automation in the monitoring of fault situations, which enables a more precise and systematic intervention than before, also in connection with causes typically leading to short-term faults only. In addition, in the invention it is possible to also utilize data which as such do not directly indicate a fault situation, but from which a conclusion on a fault situation may be made by combining them with at least one other piece of data. This involves, for example, locating a fault at the line by using data which, as such, may only describe the normal operation of the parts of the line in the form of a load rate of a particular conveyor, a number of items conveyed by it or other corresponding data.

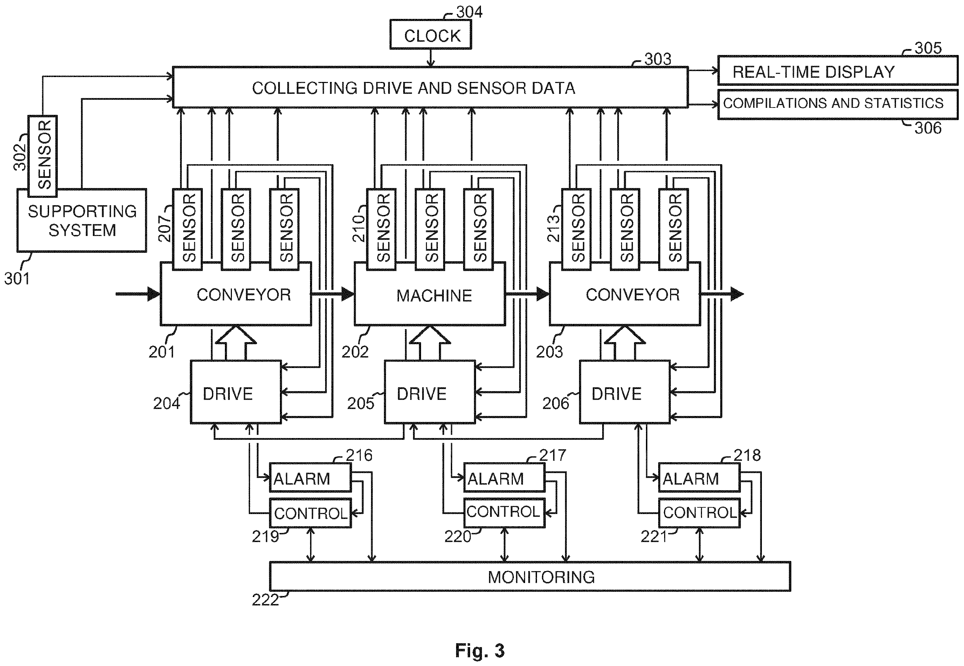

Fig. 3 schematically presents part of a timber handling line applying the present invention. In the manner described above in connection with Fig. 2, in general terms the essential handling stages may be described as machines 202 and conveyors 201 and 203. Each of them may have a respective drive, of which in Fig. 3 drives 204, 205 and 206 are presented as examples. The drives provide drive power to the stages of the handling line. The handling stages are provided with sensors that monitor the operation of the stages of the handling line. Examples of such sensors in Fig. 3 are sensors 207, 210 and 213. The sensors of each of the stages may be connected to the drive of the stage in question to enable the operation of that stage to be controlled on the basis of the data collected by the sensors.

In addition, Fig. 3 schematically presents one or more supporting systems 301 and one or more sensors 302 associated with the one or more supporting systems. The supporting system 301 may be for example a lubricating system or a side product line, and the sensor 302 may be for example a surface level sensor that measures the amount of remaining lubricant or a sensor that measures the flow rate of a side product flowing at the side product line. The handling line may also include sensors that measure factors affecting more than one stage, such as the temperature of air or other conditions such as the content of a particular impurity in air or integrity of a safety area. The handling line may also include parts and stages that are not directly classifiable as machines, conveyors or supporting systems. Examples of such stages include for example a machine vision system that measures the knottiness of timber, or a metal detector for the purpose of detecting possible metallic foreign objects in the timber that moves at the line.

Further in the same manner as in Fig. 2, the stages of the handling line may be provided with stage-specific alarm functions, examples of which are alarm functions 216, 217 and 218, and stage-specific control functions, examples of which are control functions 219, 220 and 221. The handling line may be provided with a general monitoring function which is in Fig. 3 presented by reference number 222.

The difference with respect to the implementation described above is that the data provided by devices of the handling line, indicating characteristics in the operation of the devices of the handling line, are automatically collected at the handling line of Fig. 3. Herein, the devices of the handling line generally denote all technical means which belong to the timber handling line or to the side stream and other stages associated with the timber handling line and which are constructed so as to be able to transmit data to other technical means either electronically or by other machine-readable manner.

In addition, the time which, on the basis of the collected data, is unavailable for normal operation of the handling line due to a fault is automatically measured at the handling line of Fig. 3. The causes which, on the basis of the collected data, led to one or more deviations from the normal operation of the handling line are indicated to a user. In addition, the object of the fault at the handling line and, for each of the causes, the amount of the measured time that was unavailable for the normal operation of the handling line due to the cause are indicated to the user.

The automatic collecting of data provided by devices of the handling line is presented in Fig. 3 in a way that a plurality of devices of the handling line are provided with (at least an indirect) connection to block 303, which represents the collecting of drive and sensor data. Block 303 has access to a clock 304, by means of which it may time-stamp each of the received pieces of data and/or measure the time that passes between reception of the different pieces of data. Time-stamping means storing the data together with time data indicating the time of storage, or in other manner by which it is possible to know afterwards when a particular piece of data was received and/or stored. Collecting the data provided by devices of the handling line may involve collecting data for example from the sensors 207, 210 and 213 that monitor the operation of the stages of the handling line, and/or from the drives 204, 205 and 206 that provide drive power to the stages of the handling line. It may also involve collecting data from the supporting systems 301 and/or their sensors 302 and from other devices and stages which as such have not been presented in Fig. 3.

Indicating, to a user, the cause which, on the basis of the collected data, led to one or more deviations from the normal operation of the handling line may be quite straightforward, if the handling line has only one sensor or other device that directly indicates the type of cause in question. This also applies to the object of the fault at the handling line, i.e. that stage of the handling line where the deviation from the normal operation occurred. For example, if a particular stage of the handling line is provided with an optical and/or mechanical sensor that indicates diagonal feed, the sensor may detect the diagonal feed, whereby the drive (to which the sensor is connected in a manner known per se) of that stage may interrupt the operation of the stage. In connection with such an event, block 303 may store data on the signal provided by the diagonal feed sensor, the interruption caused by the drive, and restarting of the drive after the diagonal feed situation has been cleared up. On the basis of these data it is relatively straightforward to indicate to a user that the handling line was out of normal operation for a certain time and that it was caused by diagonal feed at the stage in question.

Other such faults of which the nature and location at the operated line are straightforwardly derivable from data provided by a single source include, for example, notification of a faulty feed from a feed opening guard; notification from a pocket-monitoring sensor of a pocket filling up or a feeding fault at a pocket; an image or data provided by machine vision or other imaging system on a rejection rate exceeding a predetermined limit; data obtained from a moisture meter on moisture exceeding a predetermined limit; tripping of a thermal relay relating to a particular motor or other actuator; malfunction of a frequency converter drive controlling a particular motor; surface level data indicating the surface level in some container; stopping of a chip conveyor belt or dust extraction; other stopping of a side stream of the handling line; or other corresponding reason. In some cases, the data indicating a fault may also be considered to encompass the absence of such data which should have been received under normal operation of the handling line. For example, if no image is regularly obtained from a particular machine vision system, while normally it should be obtained, the handling line or some part of it may have to be stopped, because the absence of the image could mean a failure in fault detection capacity and thereby a decrease in safety.

However, many such faults may occur at the handling line on which various types of data are certainly stored but for which it is difficult to say as such, on the basis of the stored data, what the fault in question was and at which stage of the handling line it occurred. An example may be a situation where a bundle of planks brought from the dryer and placed in an unbundling device will not, for some reason, start to unbundle normally or at all. In this case the first event on which the automatically collected data may be provided and stored may be, for example, a decrease or drop to zero of a load rate at a conveyor following the unbundling device, or switching of the unbundling device (by a user) from automatic drive to manual drive. The smaller load rates than usual and manual drive instead of automatic may be detected at all stages of the handling line after the fault point up to the time when the fault has been cleared up and the unbundling device operates normally again.

The monitoring of load rates and using them to conclude the point of fault may be described by saying that the fault is "earmarked" for those handled items which should, under normal operation, have arrived within the range of particular detection within a certain time. From a stage of the handling chain which itself is not provided with sensors directly or which does not apply strictly item-specific handling, the handled items may be expected to move to a stage provided with sensors at higher precision and/or applying stricter item-specific handling within a time which is typically 10-60 seconds. If, at a stage provided with sensors at higher precision, it is observed that one or more items are missing, this observation may be used as a basis for storing data indicating that a fault occurred 10-60 seconds earlier at that stage of the handling chain from which the items should have proceeded to the stage provided with sensors at higher precision within the length of time in question.

The strict item-specific handling denotes for example a sorting table or a flight conveyor in which there is a separate space between flights for each of the logs or planks being handled. It may be preceded at the handling line for instance by a chain conveyor or a belt where the items move without an item-specific place determined by the structure of the apparatus, and which therefore does not apply strictly item-specific handling. A stage which does not apply strictly item-specific handling may use an item counter or other separate device by which it is possible to monitor the order of the items and the time of their movement at the handling line. The data provided by the item counter or the like facilitates the above-described "earmarking": if a fault is detected at the line, the cause for it and the object of the fault may, if necessary, be concluded from deviations detected earlier at the line, whereby the time of movement of the items having led to such deviations to a specific later detection point is known.

A second example of a fault situation in which the automatically collected data provided by devices of the handling line indicate the cause for the fault only indirectly is congestion, i.e. unwanted accumulation of handled items at such stage of the handling line which is not directly provided with a sensor reacting to the congestion. A similar type of fault situation is a jam, where one or more handled items do not start moving as they should or move considerably slower than they should. The load rates and data describing the running of the devices are the types of data provided by devices of the handling line by means of which it is possible to locate the congestion or jam and indicate it as the cause for the fault: if it would seem that all conveyors are running normally, but after a particular point the load rates point to zero or are otherwise significantly smaller than normally, there is most likely congestion or a jam at that point of the handling line.

A third example of a fault situation in which the automatically collected data provided by devices of the handling line indicate the cause for the fault only indirectly is breach of a safety area or manual activation of a safety area. The monitoring of the safety area that surrounds the movable, live, hot and/or otherwise dangerous parts of the handling line may be implemented with light cells, mechanical switches, machine vision applications, or other manners that are known per se. For the purpose of clarity it may be stated that when speaking about the sensors that monitor the operation of the stages of the handling line, the sensors used for monitoring the safety area are also included. If a user or some movable object enters the safety area, or if the user activates a safety area function on purpose for example by pushing a safety switch, the monitoring function stops the movement of the movable parts and/or activates other operations for the purpose of preventing a dangerous situation from happening. The data indicating a breach or activation of a safety area may, however, only indicate the approximate route along which the user moved to the safety area: they do not indicate directly at what point of the handling line there was a fault or other event differing from the normal operation so as to prompt someone to enter the safety area. However, the last-mentioned data may be derivable from those data provided by devices of the handling line which are timed simultaneously with the breach of the safety area, or slightly before or after it.

One example of a fault situation in which the automatically collected data provided by devices of the handling line may indicate the cause for the fault directly or only indirectly, depending on the object, is an operation performed by a user, for example stopping some stage or switching it from automatic control to manual control. The user may direct his or her operation for instance to the control of the drive of some stage (see blocks 219, 220 and 221 in Fig. 3), whereby the user may for example push a button, turn a switch or give a command via a control computer. Although the user operation is usually deliberately performed and there is a good reason for it, it may still cause the handling line to be out of normal operation for a certain time Therefore the expression "data provided by devices of the handling line" shall also include data on a user operation performed to control the drive of a stage of the handling line.

As described above, the causes which, on the basis of the collected data, led to one or more deviations from the normal operation of the handling line may be indicated to a user. Especially in the above-described examples in which the data provided by devices of the handling line indicate the reason only indirectly, the indicating of the causes to a user may include making conclusions. In this case, at least one cause indicated to a user is a conclusion made on the basis of two or more pieces of data collected from the devices of the handling line. The technologies by which a system capable of automatic data processing is caused to make conclusions from given data are known per se and thus need not be discussed in more detail herein. The simplest ones of such technologies are usually based on pre-programmed routines which compare combinations of the received data with prestored possible data combinations, select the best suited one for the situation and provide a corresponding conclusion. More advanced technologies may utilize for example artificial intelligence, which does not have to be pre-programmed to identify every possible anticipated combination of data, but which is able to make conclusions also in unpredictable situations.

The invention does not, in itself, set any limitations on what would be considered such temporal duration of a fault that would provide a reason to indicate, to a user, the cause(s) which, on the basis of the collected data, led to a deviation from the normal operation of the handling line. In some cases it is, however, advantageous to define that said indicating of the causes to a user is performed on the basis of data resulting in shorter-term deviations than a predetermined time limit from the normal operation of the handling line. This definition may be based on the fact that the longer-term deviations than the predetermined time limit from the normal operation of the handling line will be included in other reports for example in the form of the log as described above.

Fig. 3 presents two examples of how the results of the functionality represented by block 303 may be utilized. One possibility is that, in the manner represented by block 305, those automatically collected data provided by devices of the handling line which indicate deviations from the normal operation of the handling line are indicated to a user in real time. The user may in this case, if desired, monitor the occurrence and detection of the fault situations in real time. The real-time indicating is useful for example when it is to be verified that the detection of the fault situations and the storage of the corresponding data are working correctly. The user may stand with a portable computer at a location from which he or she sees the operation of the handling line with his or her own eyes. As the user then observes a fault in the operation of the line, he or she may ensure from the real-time display that the system received and stored the relevant data.

To improve the operational efficiency of the handling line it may, however, be more useful to prepare compilations and statistics on the fault situations detected by the system in accordance with block 306. The system may for example group the stored data according to which cause led, on the basis of the collected data, to which amount of time to be unavailable for normal operation of the handling line. Additionally or instead, the system may analyse if the occurrence of some particular cause is linked to some explanatory factor such as the time of day, season or temporal correlation with some other cause occurring in like manner. The compilations and statistics may help the user to pay attention to the most important efficiency-reducing factors and to find ways in which it is possible to reduce the occurrence of the faults and/or to reduce the temporal duration of breaks caused by the faults in the normal operation, which leads to the improvement of efficiency.

An example of preparing a compilation or statistic may include a report collecting the fault data and possible conclusions automatically formed from the fault data for a particular time period such as for a particular work shift. This type of report may list the number of faults that occurred during the time period in question, the most common points of fault at the handling line, objects of the faults in general, duration of each of the faults and combined duration for different fault types and objects of faults, possible trends, i.e. the detected lines of development in the occurrence and duration of the faults, and so on.

The invention does not set limitations on what type of human-machine interface is to be used for communication with the user, for example to indicate to the user the causes which, on the basis of the collected data, led to one or more deviations from the normal operation of the handling line. In the configuration presented in Fig. 3, blocks 305 and/or 306 may be implemented for example in the form of a computer display located in the monitoring station. The system may present the above-described data for example as text rows, graphical symbols or their combinations. The user interface may also include a remote control functionality, whereby the data described above may first be transferred, over some suitable data transfer network arranged between the devices, to a user interface device located at a distance from the handling line, which user interface device may be for example a portable computer, for being presented to the user.

The method and arrangement according to the invention may be applied in any part or unit formed by the parts of a timber handling line. In the above disclosure, primarily a sorting plant has been discussed for exemplification; however, this is not limiting in terms of the invention, but the same principles may also be applied as such in other points of the handling line, for example at a sticker stacker (represented by stages 109-112 in the description of the prior art presented above).

The embodiments of the invention presented above are not exclusive or limiting in regard to what falls within the scope of protection of the claims presented hereinafter. The invention relates to the technical idea presented in the claims, and its embodiments are only examples of some practical implementations that have been found to be functional. It is possible to make many modifications to the presented embodiments without departing from the scope of protection of the claims.

## Claims

1. A method for processing data at a timber handling line, the method comprising
- automatically collecting data provided by devices of the handling line, the data indicating characteristics in the operation of the devices of the handling line,
- automatically measuring the time which, on the basis of the collected data, is unavailable for normal operation of the handling line due to a fault, wherein the normal operation denotes a situation where the devices of the handling line are essentially running and timber is moved and handled at the line at a rate decided by users of the line, and
- indicating, to a user, the causes which, on the basis of the collected data, led to one or more deviations from the normal operation of the handling line and, for each of the causes, the object of the fault at the handling line as well as the amount of the measured time that was unavailable for the normal operation of the handling line due to the cause.

2. The method according to claim 1, wherein said collecting of data provided by devices of the handling line includes collecting of data from sensors that monitor the operation of stages of the handling line.

3. The method according to claim 1 or 2, wherein said collecting of data provided by devices of the handling line includes collecting of data from drives that provide drive power to the stages of the handling line.

4. The method according to any of the preceding claims, wherein said indicating of the causes to a user includes making conclusions in a way that at least one cause indicated to a user is a conclusion made on the basis of two or more pieces of data collected from the devices of the handling line.

5. The method according to claim 4, wherein said conclusions comprise at least one of the following: data derived from a load rate of one of more conveyors being lower than normally, indicating a fault before the one or more conveyors in question; data derived from conveyors running while the load rate is decreasing, indicating congestion at a particular stage of the handling line; data derived from breach or activation of a safety area and from other data provided by devices of the handling line, indicating location of the fault.

6. The method according to any of the preceding claims, wherein said data provided by devices of the handling line comprise at least one of the following: data on a conveyor running or not running; data on the load rate of a stage of the handling line; data on a diagonal or faulty feed detected by a sensor; surface level data indicating a surface level of some container; an image provided by an imaging system in connection with the handling line; data on a user operation performed to control the drive of a stage of the handling line.

7. The method according to any of the preceding claims, wherein said indicating of the causes to a user is performed on the basis of data resulting in shorter-term deviations than a predetermined time limit from the normal operation of the handling line.

8. The method according to any of the preceding claims, wherein those automatically collected data provided by devices of the handling line which indicate deviations from the normal operation of the handling line are indicated to a user in real time.

9. An arrangement for processing data at a timber handling line, the arrangement comprising
- an automatic data collector arranged to automatically collect data provided by devices of the handling line, the data indicating characteristics in the operation of the devices of the handling line,
- a clock, and
- a processing section connected to said data collector and clock and arranged to automatically measure the time which, on the basis of the collected data, was unavailable for normal operation of the handling line due to a fault and to indicate, to a user, the causes which, on the basis of the collected data, led to one or more deviations from the normal operation of the handling line and, for each of the causes, the object of the fault at the handling line as well as the amount of the measured time that was unavailable for the normal operation of the handling line due to the cause;
wherein the normal operation denotes a situation where the devices of the handling line are essentially running and timber is moved and handled at the line at a rate decided by users of the line.

10. The arrangement according to claim 9, comprising sensors that are arranged to monitor the operation of stages of the handling line and are connected to said automatic data collector for collecting the data provided by the sensors.

11. The arrangement according to claim 9 or 10, comprising one or more drives for providing drive power to the stages of the handling line, which drives are connected to said automatic data collector for collecting the data provided by the drives.

12. The arrangement according to any of claims 9-11, wherein said processing section is arranged to make conclusions in a way that at least one cause indicated to a user is a conclusion made on the basis of two or more pieces of data collected from the devices of the handling line.

13. The arrangement according to any of claims 9-12, comprising a user interface for indicating, to a user, in real time those automatically collected data provided by devices of the handling line which indicate deviations from the normal operation of the handling line.
